Europäisches Patentamt

**European Patent Office**

Office européen des brevets

(11) Veröffentlichungsnummer: **0 020 394**
**B1**

(12) **EUROPÄISCHE PATENTSCHRIFT**

(45) Veröffentlichungstag der Patentschrift: **29.06.83**

(21) Anmeldenummer: **79901084.8**

(22) Anmeldetag: **11.09.79**

(86) Internationale Anmeldenummer:
**PCT/CH79/00124**

(87) Internationale Veröffentlichungsnummer:
**WO 80/01126 29.05.80 Gazette 80/12**

(51) Int. Cl.³: **H 04 M 17/02, G 07 F 5/24**

(54) **MÜNZFERNSPRECHER.**

(30) Priorität: **22.11.78 CH 11960/78**

(43) Veröffentlichungstag der Anmeldung:
**07.01.81 Patentblatt 81/1**

(45) Bekanntmachung des Hinweises auf die Patenterteilung:
**29.06.83 Patentblatt 83/26**

(84) Benannte Vertragsstaaten:
**FR**

(56) Entgegenhaltungen:
**DE - A - 2 825 793**
**DE - B - 1 187 686**
**FR - A - 2 161 252**
**FR - A - 2 168 153**
**FR - A - 2 350 017**
**US - A - 3 409 740**

**HASLER MITTEILUNGEN, Nr. 2, 1976,**
**BERN (CH),**
**A. NYFFENEGGER: "Die neue Kassierstation**
**AZ 44", Seiten 51 bis 56, siehe Seite 52,**
**Abschnitt 2.3; Seiten 54 und 55, Abschnitt 4.2;**
**Figur 6**

(73) Patentinhaber: **SODECO-SAIA AG**
**Postfach 420**
**CH-1211 Genf 16 (CH)**

(72) Erfinder: **RUEFF, Joseph**
**2 Chemin Chambert**
**CH-1232 Lully (CH)**

(74) Vertreter: **Müller, Hans-Jürgen, Dipl.-Ing. et al,**
**Müller, Schupfner & Gauger Lucile-Grahn-Strasse**
**38 Postfach 80 13 69**
**D-8000 München 80 (DE)**

(56) Entgegenhaltungen:
**ELECTRICAL COMMUNICATION, volume 49, Nr.**
**2, 1974,**
**LONDON (GB)**
**G. ZEIDLER: "NT 2000 Coin Telephone for**
**Worldwide Direct Distance Dialing", Seiten 144**
**bis 148 siehe Seite 145, rechte Spalte, Zeile 13**
**bis Seite 146, rechte Spalte, Zeile 23; Figuren**
**4, 6.**

Münzfernsprecher

Die Erfindung bezieht sich auf einen Münzfernsprecher mit Rückgabe nicht verbrauchter Münzen einer Mehrzahl verschiedener Münzsorten der im Oberbegriff des Patentanspruches 1 genannten Gattung.

Derartige Münzfernsprecher sind bereits bekannt (FR—A—23 50 017). Sofern nur ein einziger Münzeinwurfschlitz vorhanden ist, verlangt dieser aber einen großen Aufwand, um Münzen unterschiedlichen Werts in dafür bestimmte Einzelspeicher zu lenken, von denen sie bei "Verbrauch" von der Auswerteeinrichtung "abgerufen" werden.

Es sind auch andere Münzfernsprecher bekannt (DE—B 1 187 686), bei denen der durch Münzen zu zahlende Betrag nur in der Reihenfolge der eingegebenen Münzen beglichen werden kann, so daß Überzahlungen in Kauf genommen werden müssen. Der Telefonierende muß daher je nach den eingeworfenen Münzen oftmals mehr bezahlen als an Telefongebühren an sich zu zahlen wären.

Schließlich sind auch solche Münzfernsprecher bekannt (elektrisches Nachrichtenwesen 1964, Seiten 126—130, US—A 3 409 740 und FR—A 2 168 153), bei denen mehrere Münzeinwurfschlitze mit zugehörigen Münzkanälen für die jeweiligen Münzsorten vorhanden sind, beispielsweise für DM 1. — -Münzen, für DM 5. — -Münzen, für DM —.50 -Münzen und für DM —.10 -Münzen. Der Dedarf an Einzelaggregaten und Raum ist dabei aber auch verhältnismäßig groß und die Störanfälligkeit gegenüber Ein-Kanal-Systemen vergrößert.

Der Erfindung liegt die Aufgabe zugrunde, die Durchführung einer optimalen Münzrückgabe auf einfachere, kostensparende und störunfanfälligere, d.h. noch sicherere Art zu bewirken.

Die Erfindung ist im Patentanspruch 1 gekennzeichnet und in Unteransprüchen sind weitere Verbesserungen beansprucht.

Der Klappe bei der Erfindung sind nur zwei Stellungen zugeordnet, nämlich die beiden Endlagen. Diese Vorrichtung arbeitet daher ebenfalls wenig störanfällig und sicher. Darüber hinaus sorgt eine Rückstellfeder dazu, daß die Klappe zusätzlich in eine der zwei stabilen Endlagen gedrückt wird. Selbst bei Erschütterungen wird daher vermieden, daß die Klappe ungewollt aus der einen Endstellung in eine andere gelangt. Dieses "Umsteuern" bzw. Verschwenken der Klappe besorgt dagegen ein Drehantrieb. Auch die Schnelligkeit der Umsteuerung läßt dann nicht zu wünschen übrig, wobei dennoch eine genügende Sicherheit gewährleistet ist und vermieden wird, daß die Klappe eine "neutrale" Mittelstellung einnimmt, bei der der Münzentransport verhindert würde.

Im folgenden wird ein Ausführungsbeispiel der Erfindung anhand der Zeichnung näher erläutert. Dabei zeigen:

Fig. 1 eine Prinzipdarstellung der Kassiereinrichtung eines Münzfernsprechers, sowie als Detail davon in der

Fig. 2 eine Aufsicht und in der (hieran schließen sich an Seite 2 ff der ursprünglichen Beschreibung).

Fig. 3 eine Seitenansicht einer zugehörigen Münzweiche, beide Figuren im Schnitt.

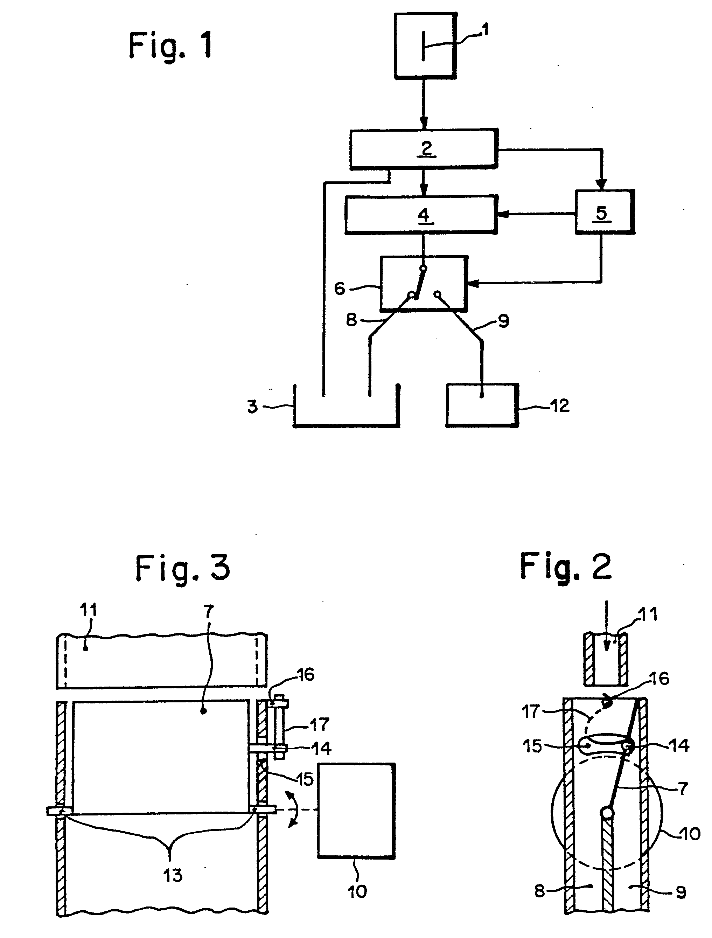

In der Fig. 1 bedeutet 1 den einzigen Geldeinwurfschlitz eines Münzfernsprechers, der verschiedene Münzsorten aufnehmen kann. Ein Münzprüfer 2 dient der Feststellung der Münzwerte und deren Echtheit. Schlechte Münzen fallen direkt in eine Rückgabeschale 3. Der Münzprüfer 2 ist einem einzigen Münzspeicher 4 vorgeschaltet, der verschiedene Münzsorten aufnehmen kann. Eine Auswerteeinrichtung 5 erfasst den Wert und die Reihenfolge der eingegebenen Münzen, gibt die Gesprächsleitung frei und vergleicht laufend das Guthaben der gespeicherten Münzen mit dem durch ein Telephongespräch aufgelaufenen Betrag. Die Auswerteeinrichtung kann ein Mikro-Prozessor sein.

Eine dem Münzspeicher 4 nachgeschaltete Einrichtung zur Einkassierung oder Rückgabe der Münzen ist als Münzweiche 6 ausgebildet, die am Ende eines Gespräches von der Auswerteeinrichtung 5 entsprechend dem verbliebenen Restbetrag für jede der einzelnen Münzen aussteuerbar ist. Die Auswerteeinrichtung 5 entscheidet dabei so, dass für die Rückgabe nur der kleinstmögliche Münzwert einer allenfalls wertmässig nicht ganz aufgebrauchten Münze einkassiert wird.

Als Münzweiche 6 dient eine in der Fallrichtung der aus dem Münzspeicher 4 austretenden Münze gelagerte schwenkbare Klappe 7 (Fig. 2 und 3). Die Klappe 7 kann zwei stabile Lagen einnehmen und verschliesst entweder einen Rückgabe- oder einen Kassierkanal 8 bzw. 9. In beiden Lagen gleitet die durch einen Kanal 11 aus dem Münzspeicher 4 im freien Fall austretende Münze entlang der Klappe 7, welche die Münze entweder durch den Rückgabekanal 8 in die Rückgabeschale 3 oder durch den Kassierkanal 9 in eine Münzkasse 12 leitet. Dabei drückt die Kraft der fallenden Münze die Klappe 7 zusätzlich in ihre momentane Lage und unterstützt so die Beibehaltung dieser Lage.

Die Klappe 7 besitzt an ihrer unteren Abschlusskante zwei Lagerzapfen 13, mit denen sie in den seitlichen Begrenzungen des Rückgabe- und Kassierkanals 8 bzw. 9 gelagert ist. Ein vorstehender Finger 14 der Klappe 7 durchdringt die Begrenzung der Kanäle 8 bzw. 9 in einer Oeffnung 15. Ausserhalb der Kanäle 8 und 9 wirkt zwischen einem feststehenden, an der seitlichen Begrenzung angeformten Finger 16 und dem Finger 14 eine Druckfeder 17, im Beispiel ist es eine Omega-Feder. Der feststehende Finger 16 ist in der Mitte der Schmalseite des Kanales 11 angeordnet. Die Druckfeder 17 bewirkt deshalb in beiden Endlagen der Klappe 7 eine die Klappe in diesen Lagen haltende Kraft.

Am einen der Lagerzapfen 13 greift ein Drehantrieb 10 an. Dieser kann ein Kleinmotor oder ein Drehmagnet sein, der bei elektrischer Erregung entgegen einer Rückstellfeder eine Drehung von etwa 90° vollführt und diese Drehung auf die Klappe 7 überträgt, die dann im vorliegenden Beispiel den Rückgabekanal 8 abdeckt. Bei Wegfall der Erregung geht die Klappe 7, verursacht durch die Rückstellfeder des Drehantriebes 10, wieder in ihre Ruhestellung zurück, das heisst, sie verdeckt dann den Kassierkanal 9.

Der beschriebene Münzfernsprecher arbeitet wie folgt: Eine Münze irgend eines Wertes wird in den Geldeinwurfschlitz 1 eingeworfen. Sie durchläuft den Münzprüfer 2 und wird von diesem entweder der Rückgabeschale 3 zugeleitet oder als gute Münze anerkannt und im Münzspeicher 4, deren Wert aber in der Auswerteeinrichtung 5 gespeichert. Hat der Wert der akzeptierten Münzen einen Minimalbetrag überschritten, dann wird der Fernsprecher von der Auswerteeinrichtung 5 für eine entsprechende Verbindung freigegeben. Nach Beendigung des Gespräches entscheidet die Auswerteinrichtung für jede einzelne, vom Münzspeicher ausgegebene Münze, ob diese entsprechend der Gesamtabrechnung zurückgegeben oder einkassiert werden soll, und steuert dementsprechend über den Drehantrieb 10 die Münzweiche 6.

Der beschriebene Münzfernsprecher ergibt in Verbindung mit nur einem einzigen Münzspeicher, dessen Speicherfächer sowohl für die kleinste als auch die grösste der zugelassenen Münzen verwendbar ist, einen einfachen und kostengünstigen Aufbau.

## Patentansprüche

1. Münzfernsprecher mit Rückgabe nicht verbrauchter Münzen einer Mehrzahl verschiedener Münzsorten, mit einem einzigen Münzeinwurfschlitz (1) für alle Münzsorten, mit einem einzigen Münzprüfer (2) zur Prüfung des Wertes und der Echtheit der eingeworfenen Münzen, mit einem Münzspeicher (4) zum Speichern aller eingeworfenen, für echt befundenen Münzen, mit einer vom Münzprüfer (2) steuerbaren Auswerteeinrichtung (5) zur Feststellung des Wertes der gespeicherten Münzen, mit einer von einer Antriebsvorrichtung (10) betätigbaren, durch eine verschwenkbare Klappe (7) blockierbaren Münzweiche (6), die verbrauchte Münzen zur Einkassierung oder noch nicht verbrauchte Münzen zur Rückgabe freigibt, bei der auch die Antriebsvorrichtung (10) von der Auswerteeinrichtung (5) steuerbar ist, die den Wert der Münzen im Münzspeicher (4) erfaßt und bei Gesprächsende die Antriebsvorrichtung (10) im Sinne optimaler Münzrückgabe steuert, dadurch gekennzeichnet, daß die Lagerstellen (13) der verschwenkbaren Klappe (7) in Münzfallrichtung unten angeordnet sind und die Klappe (7) von einer Rückstellfeder (17) in eine von zwei stabilen Endlagen drückbar und von einem Drehantrieb (10) in jeweils eine dieser beiden Endlagen verschwenkbar ist, in der sie entweder den zur Rückgabe (3) führenden Rückgabekanal (8) oder den zur Einkassierung (12) führenden Kassierkanal (9) sperrt, und daß die Auswerteeinrichtung (5) die Reihenfolge der in einem einzigen Münzspeicher nicht nach Werten getrennt gespeicherten Münzen erfaßt und auswertet.

2. Münzfernsprecher nach Anspruch 1, dadurch gekennzeichnet, daß die Münzen vom Münzspeicher (4) im freien Fall durch einen Verbindungskanal (11) in die Münzweiche (6) fallen.

3. Münzfernsprecher nach Anspruch 1 oder 2, dadurch gekennzeichnet, daß die Rückstellfeder (17) die verschwenkbare Klappe (7) bei Stillstand der Antriebsvorrichtung (10) in die den Rückgabekanal (8) freigebende Endlage drückt.

4. Münzfernsprecher nach einem der vorhergehenden Ansprüche, dadurch gekennzeichnet, daß eine Omega-Feder als Rückstellfeder (17) dient.

5. Münzfernsprecher nach einem der vorhergehenden Ansprüche, dadurch gekennzeichnet, daß die Auswerteeinrichtung (5) einen Mikroprozessor aufweist.

## Revendications

1. Appareil téléphonique à monnaie avec restitution des pièces de monnaie non consommées et utilisant des pièces de plusieurs sortes, comprenant une unique fente (1) d'introduction des pièces de monnaie pour toutes les sortes de pièces de monnaie, un unique contrôleur de pièces de monnaie (2) destiné à contrôler la valeur et l'authenticité des pièces de monnaie introduites, un accumulateur de pièces de monnaie (4) destiné à accumuler toutes les pièces de monnaie introduites et trouvées bonnes, un dispositif d'évaluation (5) pouvant être commandé par le contrôleur de pièces de monnaie (2) pour déterminer la valeur des pièces de monnaie accumulées, un aiguillage des pièces de monnaie (6) pouvant être actionné par un dispositif d'entraînement (10) et pouvant être bloqué par un volet oscillant (7) qui libère les pièces de monnaie consommées pour l'encaissement ou les pièces de monnaie non consommées pour la restitution, restitution au cours de laquelle le dispositif d'entraînement (10) peut également être commandé par le dispositif d'évaluation (5) qui enregistre la valeur des pièces de monnaie contenues dans l'accumulateur de pièces de monnaie (4) et, à la fin de la conversation, commande le dispositif

**0 020 394**

d'entraînement (10) dans le sens d'une restitution optimale des pièces de monnaie, caractérisé en ce que les paliers (13) du volet oscillant (7) sont disposés en bas dans le sens de la chute des pièces de monnaie, en ce que le volet (7) peut être pressé par un ressort de rappel (17) dans l'une des deux positions extrêmes stables et peut être pivoté, par un entraînement en rotation (10), dans une de ses deux positions extrêmes dans laquelle il bloque soit le canal de restitution (8) qui mène à la restitution (3), soit le canal d'encaissement (9) qui mène à l'encaissement (12), et en ce que le dispositif d'évaluation (5) enregistre l'ordre de succession des pièces de monnaie accumulées, sans être réparties selon leur valeur, dans un accumulateur de pièces de monnaie unique et les évalue.

2. Appareil téléphonique à monnaie suivant la revendication 1, caractérisé en ce que, de l'accumulateur de pièces de monnaie (4), les pièces de monnaie tombent en chute libre dans l'aiguillage de pièces de monnaie (6) par un canal de liaison (11).

3. Appareil téléphonique à monnaie suivant la revendication 1 ou 2, caractérisé en ce que, dans l'état de repos du dispositif d'entraînement (10), le ressort de rappel (17) presse le volet oscillant (7) dans la position extrême qui libère le canal de restitution (8).

4. Appareil téléphonique a monnaie suivant l'une des revendications précédentes, caractérisé en ce que le ressort en oméga sert de ressort de rappel (17).

5. Appareil téléphonique à monnaie suivant l'une des revendications précédentes, caractérisé en ce que le dispositif d'évaluation (5) comprend un micro-processeur.

## Claims

1. A coin operated telephone with return of unused coins in a plurality of different kinds of coins, having a single coin insertion slot (1) for all kinds of coins, a single coin testing means (2) for testing the value and the authenticity of the coins inserted, a coin storage means (4) for storing all inserted coins which are found to be genuine, an evaluation means (5) which is controllable by the coin testing means (2), for detecting the value of the stored coins, a coin switching means (6) which is actuable by a drive means (10) and which can be blocked by a pivotal flap (7) and which releases the coins that have been used, for coin collection, or coins that have not been used, for return, wherein the drive means (10) is also controllable by the evaluation means (5) which detects the value of the coins in the coin storage means (4) and which, at the end of a call, controls the drive means (10) to provide for optimum coin return, characterised in that the mounting means (13) of the pivotal flap (7) are arranged at the bottom in the direction in which the coins fall and the flap (7) can be urged by a return spring (17) into one of two stable limit positions and can be pivoted by a rotary drive means (10) into a respective one of said two limit positions, in which it blocks either the return passage (8) leading to the return means (3) or the collection passage (9) leading to the coin collection means (12), and that the evaluation means (5) detects and evaluates the sequence of the coins which are stored in a single coin storage means without being separated in accordance with coin values.

2. A coin operated telephone according to claim 1 characterised in that the coins from the coin storage means (4) fall into the coin switching means (6) under free fall conditions through a connecting passage (11).

3. A coin operated telephone according to claim 1 or claim 2 characterised in that the return spring (17) urges the pivotal flap (7) into the limit position in which it opens the return passage (8), when the drive means (10) is stationary.

4. A coin operated telephone according to one of the preceding claims characterised in that an omega-shaped spring serves as the return spring (17).

5. A coin operated telephone according to one of the preceding claims characterised in that the evaluation means (5) has a microprocessor.

Fig. 1

Fig. 3

Fig. 2